# EUROPÄISCHE PATENTSCHRIFT

(11) **EP 2 253 050 B1**
(45) Veröffentlichungstag und Bekanntmachung des Hinweises auf die Patenterteilung: **29.03.2017**
(21) Anmeldenummer: 09716224.2
(22) Anmeldetag: 03.03.2009
(51) Int. Cl.: H01R 13/60

(54) **HALTERUNG FÜR STECKVERBINDER EINES KÄLTEGERÄTES, INSBESONDERE HAUSHALTSKÄLTEGERÄT**
MOUNTING FOR CONNECTOR OF A REFRIGERATION DEVICE, PARTICULARLY A HOUSEHOLD REFRIGERATION DEVICE
FIXATION POUR UN CONNECTEUR D'UN APPAREIL FRIGORIFIQUE, EN PARTICULIER D'UN APPAREIL FRIGORIFIQUE MÉNAGER

(30) Priorität: 03.03.2008 DE 102008012323
(43) Veröffentlichungstag der Anmeldung: 24.11.2010
(73) Patentinhaber: BSH Hausgeräte GmbH, 81739 München (DE)
(72) Erfinder: JUNG, Carsten, 89542 Herbrechtingen (DE); ERHARDT, Lothar, 73433 Oberalfingen (DE); ZIEGLER, Martin, 89542 Herbrechtingen (DE)
(86) Internationale Anmeldenummer: PCT/EP2009/052507
(87) Internationale Veröffentlichungsnummer: WO 2009/109577

(56) Entgegenhaltungen:
- DE-A1- 4 428 197
- JP-A- 10 003 964
- JP-A- 2007 026 791

## Beschreibung

Die Erfindung betrifft eine Halterung für einen Steckverbinder bzw. Netzstecker eines Haushaltsgerät, insbesondere Kältegeräts, nach dem Oberbegriff von Anspruch 1.

In den Produktionsanlagen von Haushaltsgeräten, wie beispielsweise Kühlschränken oder Gefrierschränken, Herden, Waschmaschinen, usw. wird nach deren Herstellung das Netzkabel am jeweiligen Haushaltsgerät aufgewickelt und befestigt, um es für den Gerätetransport vorzubereiten. Hierbei ist bekannt, die Netzkabel vorzugsweise an der Rückseite der Geräte aufzuwickeln und zu befestigen. Dafür können am Haushaltsgerät spezielle Aufwickelvorrichtungen vorgesehen sein, die den Kabelwickel aufnehmen und oftmals auch eine Halterung für den Netzstecker bieten. Durch die Halterung soll verhindert werden, dass sich der Netzstecker beim Transport löst und der Stecker oder das Kabel beschädigt oder herausgerissen wird. Eine derartige Leitungs-Aufwickelvorrichtung ist in der DE 3404060 A1 beschrieben.

Die DE 44 28 197 A1 offenbart zum Zwecke der Vermeidung einer Inbetriebnahme einer elektrisch betreibbaren Waschmaschine bei einer wirksamen Transportsicherung des schwingend aufgehängten Aggregates der Waschmaschine dessen Netzstecker werksseitig mittels eines Bauteils zur Transportsicherung so zu positionieren, das er sich keinesfalls mit einer festen Steckdose einer Hausinstallation unmittelbar verbinden lässt.

Die JP 10003964 A und die JP 2007026791 A offenbaren weitere Halterungen für einen Netzstecker.

Vor der Auslieferung werden die Haushaltsgeräte wie z.B. Kältegeräte jedoch üblicher Weise diversen Prüfungen wie Hochspannungs- und Leistungsprüfungen unterzogen, bei denen die Kältegeräte an verschiedene Testgeräte angeschlossen werden. Dabei müssen die Netzkabel abgewickelt und die Netzstecker in die entsprechende Buchse des Testgeräts eingesteckt werden oder anderweitig mit Gegenkontakten (bspw. Schleifkontakten) des Testgeräts in Kontakt gebracht werden. Nach erfolgter Endprüfung werden die Netzkabel wieder aufgewickelt, um das Gerät erneut transportfähig zu machen. Dieser Vorgang fordert das manuelle Eingreifen von Geräteprüfern und ist dadurch sehr aufwändig.

Der Erfindung liegt die Aufgabe zugrunde, eine Halterung für den elektrischen Steckverbinder eines Haushaltsgeräts, insbesondere Kältegeräts, zu entwickeln, welche eine Vereinfachung der Kontaktierung der Geräte mit der Netzspannung erlaubt.

Gelöst wird die Aufgabe gemäß der Erfindung durch eine Halterung für einen Steckverbinder zum Anschluss eines Haushaltsgeräts, insbesondere Kältegeräts, an die Netzspannung mit den Merkmalen von Anspruch 1.

Erfindungsgemäß wird eine Halterung für den elektrischen Steckverbinder bzw. den Gerätestecker zum Anschluss an die Netzspannung so ausgebildet, dass sie zum einen über eine Befestigung am jeweiligen Haushaltsgeräts, insbesondere Kältegerät, bevorzugt Haushaltskältegeräts, selbst oder einem diesem zugeordneten Element, wie beispielsweise einer Transportpalette oder einem Verpackungsteil, befestigbar ist oder ein Befestigungselement aufweist, mit dem es in eine am Haushaltsgerät, insbesondere Kältegerät, selbst oder einem diesem zugeordneten Element vorgesehene Befestigung eingreift. Zum anderen weist die Aufnahme der Halterung, welche den elektrischen Steckverbinder aufnimmt, ein Positionierelement auf, in das vorzugsweise die ein oder mehreren Steckerkontakte selbst eingreifen bzw. das diese fixiert oder stützt und von dem die Steckerkontakte in einer definierten kontaktierbaren Position so gehalten werden, dass sie von ein oder mehreren Gegenkontakten z.B. eines Testgeräts direkt kontaktiert werden können. Über das Befestigungselement kann die Halterung somit in eine definierte Position gegenüber dem Haushaltsgerät, insbesondere Kältegerät, selbst oder einem zu kontaktierenden Gerät oder einer Buchse gebracht und in dieser Position fixiert werden. Über das Positionierelement in der Aufnahme der Halterung wird gewährleistet, dass die definierte Position auf die Steckerkontakte bzw. Kontaktstifte übertragen wird, dass also auch die Steckerkontakte selbst in einer definierten, den Gegenkontakten zugänglichen Position angeordnet sind. Durch die erfindungsgemäße Vorrichtung wird der Steckverbinder so gehalten, dass die Steckerkontakte mit einem Netzanschluss wie bspw. einer Spannungsbuchse verbunden werden können, ohne dass die Position des Steckverbinder selbst oder des Netzkabels zur Kontaktierung verändert werden muss, also ohne dass eines dieser Teile in die Hand genommen werden muss. Die Buchse bzw. ein Testgerät kann einfach direkt auf die Steckerkontakte des Steckverbinders aufgesetzt werden. Bei einer entsprechenden Ausgestaltung des Gegenstücks, also der Buchse oder des zu verbindenden Testgeräts kann diese Kontaktierung im Idealfall sogar automatisch erfolgen. Die erfindungsgemäße Halterung kann in vorteilhafter Weise sowohl als Transportsicherung für den elektrischen Steckverbinder und damit das Netzkabel als auch als Halterung zur Kontaktierung für Testgeräte genutzt werden. Insbesondere kann sie an einer entsprechenden Stelle in der äußeren Verpackung wie z.B. dem Verpackungsboden für das jeweilige Haushaltsgerät, insbesondere Kältegerät, vorzugsweise Haushaltskältegerät, oder am jeweiligen Haushaltsgerät, insbesondere Kältegerät selbst vorgesehen sein.

Indem das Positionierelement der Halterung die Steckerkontakte selbst aufnimmt, werden direkt die zu positionierenden Elemente selbst, also die Steckerkontakte gehalten, welche in dieser Position auch von den Gegenkontakten kontaktiert werden. Hierdurch ist eine genaue Positionierung der Steckerkontakte wesentlich einfacher möglich, da bei einem direkten Angreifen an den zu positionierenden Elementen die geringsten Toleranzen auftreten. Darüber hinaus hat dies den entscheidenden Vorteil, dass es nicht notwendig ist, den Träger der Steckerkontakte, also den Körper des Steckverbinders positionsgenau und eng zu halten, um möglichst geringe Toleranzen zu erreichen. Da die Steckerkontakte selbst positioniert werden, muss der Körper des Steckverbinders nur stabilisiert werden. Dadurch ergibt sich die Möglichkeit, die Halterung für den Steckverbinder so aufzubauen, dass den großen Toleranzen und Variationen, die für die Körper der Steckverbinder herrschen, Rechnung getragen werden kann. Die Halterung kann als Universalhalterung realisiert werden, die für verschiedenste Ausführungsformen von Steckverbinder-Körpern geeignet ist.

Das Positionierelement weist eine Auflage auf, die die Steckerkontakte des Steckverbinders, welche zumindest auf ihrer halben Länge auf ihr aufliegen, wenigstens in eine Richtung stützt. Diese Ausführungsform ist besonders dann vorteilhaft, wenn die Kontaktierung mit Testgeräten pneumatisch erfolgt. Sie kann aber auch insbesondere bei allen Kontaktierungen eingesetzt werden, bei denen die Gegenkontakte seitlich gegen die Kontaktstifte gedrückt werden. Die Auflage trägt die Steckerkontakte in einer vorgegebenen, bekannten Position, so dass die Gegenkontakte zum Herstellen der Netzverbindung ohne manuelles Eingreifen automatisch gegen die Steckerkontakte gedrückt werden können, ohne dass diese ausweichen können.

In einer besonders vorteilhaften Ausführungsform der Erfindung wird die Halterung der Steckerkontakte in dem Positionierelement über eine Klemmverbindung realisiert. Eine Klemmverbindung hat insbesondere sehr geringe Toleranzen und kann sehr einfach geschlossen werden, was sie besonders montagefreundlich macht.

In einer weiteren vorteilhaften Ausführungsform ist das Positionierelement so ausgebildet, dass eine formschlüssige Verbindung mit den Steckerkontakten erreichbar ist. Die Aufnahmen für die Steckerkontakte am Positionierelement umschließen diese nach einer vorteilhaften Variante wenigstens teilweise und sind vorzugsweise gegengleich zu den Außenkonturen der Steckerkontakte ausgeführt. Insbesondere können sie je nach Steckerkontaktform als runde oder rechteckige Konturen geformt sein. Aufnahmen, welche die Steckerkontakte wenigstens bereichsweise formschlüssig halten, haben ebenfalls den Vorteil, dass das Einführen der Steckerkontakte einfach möglich ist, dennoch aber eine sehr stabile Verbindung gewährleistet werden kann. Auch eine Kombination von Formschluss und Klemmung kann vorteilhaft sein. Diese kann sehr einfach erreicht werden, indem die formschlüssige Aufnahme ein wenig kleiner ausgebildet ist als die Steckerkontakte, aber aus einem nicht völlig starren, also leicht elastischen Material besteht.

Vorzugsweise ist die stützende Auflage so geformt, dass die Auflagekontur, an der die Steckerkontakte aufliegen, der Kontur der Steckerkontakte entspricht. Dadurch kann besonders einfach eine positionsgenaue Stützung der Steckerkontakte erreicht werden. Die Steckerkontakte werden auf der gesamten Auflagefläche formschlüssig gestützt und können bei der Beaufschlagung mit dem Druck der Gegenkontakte nicht wegrutschen.

Die stützende Auflage ist insbesondere so angeordnet und aufgebaut, dass sie die Steckerkontakte in die Richtung abstützt, in die die Halterung bewegt werden muss, um das Befestigungselement am jeweiligen Haushaltsgerät, insbesondere Kältegerät, oder einem diesen zugeordneten Element zu befestigen bzw. zu fixieren. Hierdurch wird vorteilhaft gewährleistet, dass die Halterung und damit der Steckverbinder sich nicht vom jeweiligen Haushaltsgerät, insbesondere Kältegerät, oder seinem sonstigen Halteelement löst, sobald die Kontaktierung mit den Gegenkontakten beispielsweise eines Testgeräts erfolgt, sondern im Gegenteil die durch die Gegenkontakte auf die Steckerkontakte ausgeübte Kraft dazu genutzt wird, die Befestigung der Halterung zu stabilisieren.

In einer vorteilhaften Ausführungsform der Halterung ist an dem Aufnahmeelement, das den Steckverbinder aufnimmt, nicht nur ein Positionierelement für die Steckerkontakte, sondern auch ein Trageelement zur Halterung des Körpers des Steckverbinders vorgesehen. Dieses Trageelement stabilisiert in vorteilhafter Weise den ganzen Steckverbinder in der für die Kontaktierung einzunehmenden Position und unterstützt damit die Positionierung der Steckerkontakte selbst. Indem der Körper des Steckverbinders selbst getragen wird, kann es ausreichend sein, die Steckerkontakte nur, z.B. durch eine Auflage, entgegen der Wirkrichtung der Gegenkontäkte abzustützen, um sie für eine automatische Kontaktierung beispielsweise mit den Gegenkontakten eines Testgeräts ausreichend genau zu positionieren und zu fixieren.

In einer besonders vorteilhaften Ausführungsform weist das, den Körper des Steckverbinders tragende Element mehrere unterschiedlich geformte Aufnahmen auf, welche jeweils dazu geeignet sind, einen anders geformten Körper eines Steckverbinders aufzunehmen. Dies macht die Halterung für den Steckverbinder zu einer Universalhalterung, in die unterschiedliche Typen von Standardnetzsteckern eingesetzt werden können.

In einer vorteilhaften Ausführungsform weist die Aufnahme des Trageelements eine Kontur auf, die einen Formschluss mit der Kontur des Steckverbinder-Körpers zulässt. Durch eine formschlüssige Halterung des Steckverbinder-Körpers kann eine besonders stabile Positionierung der Steckerkontakte erreicht werden. Umgreift der Formschluss weite Teile des Körpers, so kann unter Umständen sogar auf die Positionierelemente für die Steckerköntakte verzichtet werden bzw. diese können einfach nur abgestützt werden.

Vorzugsweise erfolgt die Halterung des Körpers des Steckverbinders jedoch über Trageelemente, welche elastische oder federnde Aufnahmen bzw. Greifbereiche aufweisen. Dadurch wird zum einen gewährleistet, dass der Körper des Steckverbinders zuverlässig getragen wird, zum anderen wird hierdurch aber den Toleranzen bei der Formgebung der Körper Rechnung getragen. Steckverbinder, die Körper grundsätzlich ähnlicher Formen aufweisen, können von denselben federnden bzw. elastischen Greifbereichen festgehalten werden, auch wenn die Dicke ihrer Körper oder deren Detailausführung variiert. Damit ist die Halterung für den Steckverbinder nicht auf genau eine Ausführungsform des Steckverbinder-Körpers eingeschränkt, sondern universal für eine Vielzahl von Steckerschäften bzw. Steckerkörper verwendbar.

Eine besonders gute Halterung des Körpers des Steckverbinders bei gleichzeitig sehr großer Flexibilität kann insbesondere dann erreicht werden, wenn das Trageelement beispielsweise über die Materialwahl federnd bzw. elastisch ausgebildet ist, und sich in den Bereichen, in denen die Steckverbinder eines bestimmten Typs standardmäßig im Allgemeinen gleich ausgebildet sind, aber formschlüssig an den Steckverbinder schmiegt.

Der Einführbereich kann trichterförmig oder schräg ausgebildet sein, so dass er die Gegenkontakte in einen weiteren Bereich aufnehmen, dann aber exakt zu den Kontaktstiften hin führen kann.
In einer vorteilhaften Ausführungsform ist das Befestigungselement zum Befestigen der Halterung als Steckelement ausgebildet. Dadurch kann es sehr einfach insbesondere in das das für den Transport des jeweiligen Haushaltsgeräts, insbesondere Kältegerät, vorgesehene, dieses bei der Prüfung bereits umgebende Verpackungsmaterial, welches oftmals aus Polystyrol oder Ähnlichem besteht, eingesteckt werden. Dadurch kann es dem jeweiligen Haushaltsgerät, insbesondere Kältegerät, bzw. dem Testgerät gut zugeordnet werden, unabhängig vom jeweiligen Typ des Kältegeräts oder sonstigen Haushaltsgeräts.

In einer weiteren vorteilhaften Ausführungsform ist das Befestigungselement als Rastelement ausgelegt, so dass es einfach an, am jeweiligen Haushaltsgerät, insbesondere Kältegerät, vorhandene, vorstehende Bestandteile, wie beispielsweise dem Verflüssiger, verrastet werden kann.

Wie schon mehrfach erwähnt ist die erfindungsgemäße Halterung zwar vorzugsweise für Kältegeräte entwickelt, jedoch nicht darauf beschränkt. Sie kann auch bei der Produktion bzw. der Prüfung anderer vergleichbarer Haushaltsgeräte wie beispielsweise Herde verwendet werden.

Die Erfindung betrifft auch ein Haushaltsgerät, insbesondere Kältegerät, mit einer erfindungsgemäßen Halterung als Transportsicherung für seinen elektrischen Steckverbinder oder als Kontaktierungshilfe zum Anschluss von Testgeräten an seinen elektrischen Steckverbinder.

Weiterhin betrifft die Erfindung auch eine Verpackung für ein Haushaltsgerät, insbesondere Kältegerät, mit einer erfindungsgemäßen Halterung als Transportsicherung für seinen elektrischen Steckverbinder oder als Kontaktierungshilfe zum Anschluss von Testgeräten an seinen elektrischen Steckverbinder.

Weitere Einzelheiten und Vorteile der Erfindung sowie deren Weiterbildungen ergeben sich aus den Unteransprüchen im Zusammenhang mit der Beschreibung von Ausführungsbeispielen, die anhand von Zeichnungen näher erläutert werden.

Es zeigen:
- Fig. 1 - 4: schematisch verschiedene Ansichten eines ersten Ausführungsbeispiels einer erfindungsgemäßen Halterung eines Gerätesteckers,
- Fig. 5a - c: schematisch in verschiedenen Ansichten die Halterung der Figuren 1-4 mit eingeführtem Euro-Stecker
- Fig. 6a - c: schematisch in unterschiedlichen Ansichten die Halterung der Figuren 1-4 mit eingeführtem Schweizer Stecker,
- Fig. 7a -c: schematisch in unterschiedlichen Ansichten die Halterung der Figuren 1-4 mit eingeführtem GB Stecker,
- Figur 8: schematisch in perspektivischer Darstellung eine in die Verpackung eines Haushaltsgeräts, insbesondere dessen Verpackungsboden integrierte, Halterung für einen oder mehrere Gerätestecker, und
- Figur 9: eine Halterung mit einem Gerätestecker eines Haushaltsgeräts, die in eine Ausnehmung bzw. Einbuchtung des Verpackungsbodens des Haushaltsgeräts eingepasst ist.

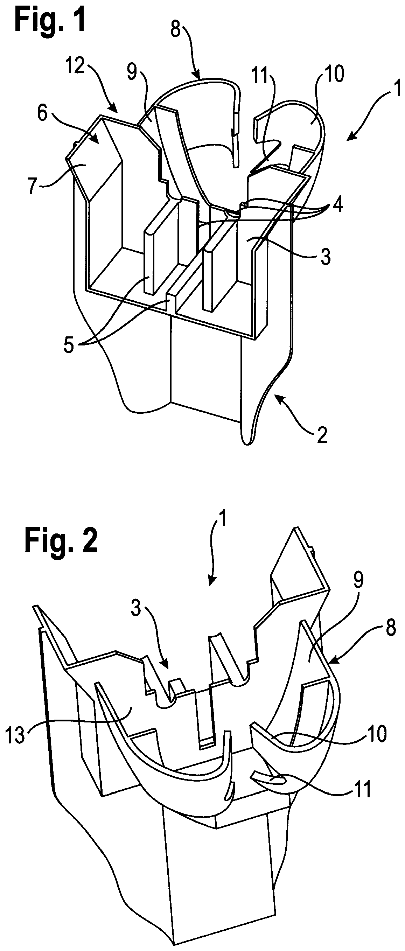

Elemente mit gleicher Funktion und Wirkungsweise sind in den Figuren 1 mit 8 jeweils mit denselben Bezugszeichen versehen.

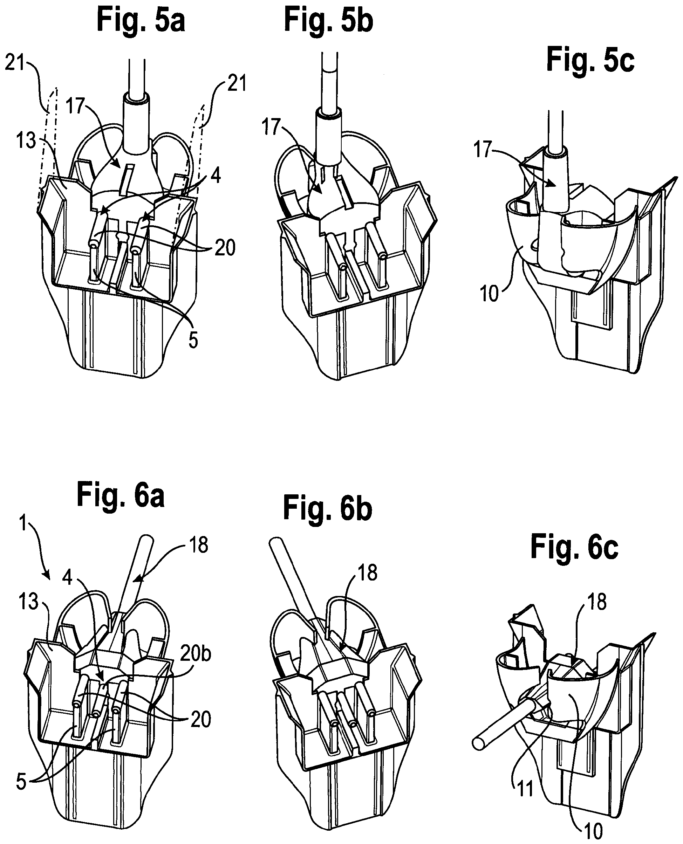

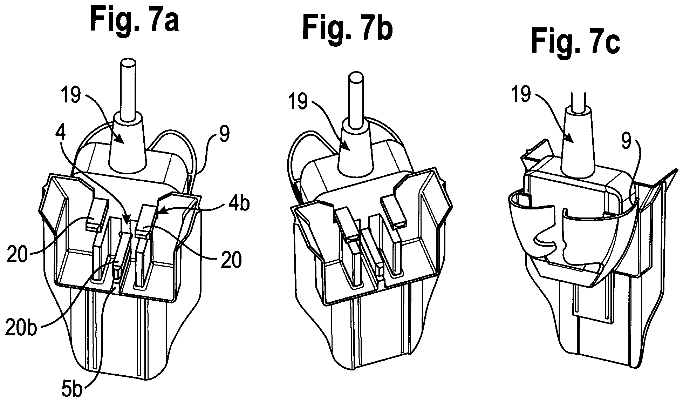

Fig. 1 zeigt eine Vorderansicht einer Halterung 1 für einen Netzstecker mit einem Befestigungselement 2, welches als flache, sich zum Ende hin verjüngende Einsteckkontur zum Einstecken der Halterung z.B. in einen nicht dargestellten Verpackungsboden wie z.B. Styroporboden, insbesondere sogenannten EPS-Boden, zur Lagerung bzw. Lagepositionierung, bevorzugt Verpackung eines Kältegeräts, insbesondere Hauhaltskältegeräts, geeignet ist. Alternativ kann die Halterung selbstverständlich auch in sonstiger Weise am Kältegerät selbst angebracht, insbesondere festgeklemmt, festgehakt, angeklebt oder angeformt sein. Oberhalb des Befestigungselements 2 liegt das Positionierelement 3, welches die, in dieser Figur nicht dargestellten Steckerkontakte eines Gerätesteckers aufnehmen kann und diese in einer definierten Position fixiert. Das Positionierelement 3 weist mehrere Haltekonturen 4 auf, deren Form jeweils an die Form der Außenkonturen der Steckerkontakte möglicher aufzunehmender unterschiedlicher Steckverbinder angepasst ist. Es sind sowohl runde als auch eckige Haltekonturen 4 vorgesehen, so dass sowohl Euro-Stecker als auch GB Stecker bzw. deren Steckerkontakte von den Haltekonturen 4 formschlüssig aufgenommen werden können. Darüber hinaus weist das Positionierelement 3 Auflagen 5 für die Steckerkontakte auf, von denen jeweils eine Auflage 5 zur Auflage eines Steckerkontakts dient. Die Auflagen 5 erstrecken sich von den Haltekonturen 4 weg senkrecht zu dem Befestigungselement 2, so dass das Befestigungselement 2 stärker in seine Halteposition gedrückt wird, sobald die auf den Auflagen 5 liegenden Steckerkontakte mit dem Druck der zu kontaktierenden Gegenkontakte beaufschlagt werden. Hier im Ausführungsbeispiel sind die Auflagen 5 durch drei Stegelemente gebildet, die im Wesentlichen horizontal verlaufen und zur Abstützung von zwei oder drei Steckerstiften üblicher Netzstecker dienen können. So können auf deren Oberkante beispielsweise die drei Steckerstifte eines gehaltenen 3-phasigen Steckers für Dreiphasenwechselspannung aufliegen (siehe z. B. Figuren 5a-5c). Im Einzelnen liegen zwei Stegelemente in der gleichen Lageebene seitlich beabstandet voneinander, während das dritte Stegelement etwa in der Mitte zwischen den beiden oberen Stegelementen in einer tiefer gelegenen Lageebene angeordnet ist. In der Umgebung der Haltekonturen 4 und Auflagen 5 befindet sich ein Einführbereich 6, der mit zwei beidseitig der Auflagen 5 angeordneten, innen liegenden Fangschrägen bzw. allgemein ausgedrückt Leitkonturen 7 ausgestattet ist, welche das Einführen, insbesondere Zentrieren, von Gegenkontakten einer Steckergegenkontaktierungseinheit (nicht dargestellt) zu den Steckerkontakten erleichtern, indem sie für einen Toleranzausgleich während des Kontaktierungsvorgangs zwischen den Steckerkontakten 20 und den korrespondierend zugeordneten Gegenkontakten der Steckergegenkontaktierungseinheit sorgen. An der den Auflagen 5 gegenüberliegenden Seite der Haltekonturen 4 befindet sich ein Trageelement 8, das mehrere Aufnahmen 9, 10 und 11 aufweist, welche den Körper bzw. Schaft des Steckverbinders halten können. Die Aufnahme 9 stellt ein Beispiel für eine Aufnahme dar, welche einen GB Stecker über einen Formschluss trägt und hält, wie in Fig. 7 näher erläutert werden wird. Die Aufnahmen 10 und 11 zeigen dagegen Beispiele für Aufnahmen, welche mit federnden Elementen versehen sind, die jeweils unterschiedliche Stecker-Typen federnd halten und dabei die Steckerkontakte in die Haltekonturen 4 drücken. Dies wird anhand der Figuren 5 und 6 näher erläutert. Trageelement 8 und Positionierelement 3 zusammen bilden gemeinsam das Aufnahmeelement 12 für den Steckverbinder.

Fig. 2 zeigt die Halterung 1 von der Rückseite her, von der das Trageelement 8 deutlicher zu sehen ist. Hier erkennt man die formschlüssige Aufnahme 9, die einen GB-Stecker von drei Seiten hält und damit in alle Richtungen außer der Einführrichtung gut fixiert. Auch die anderen, zur Verfügung stehenden Aufnahmen 10 und 11 sind in dieser Darstellung gut zu sehen. Ein Euro-Stecker würde bspw. von der federnden Aufnahme 10 gegen die Haltekonturenwand 13 des Positionierelements 3 gedrückt und dabei fixiert. Diese Ausführung ist in der Fig. 5 mit eingeführtem Stecker zu sehen. Auch ein Schweizer-Stecker würde, wie in der Fig. 6 dargestellt ist, von dem Trageelement 8 gegen die Haltekonturenwand 13 des Positionierelements gedrückt. Die Klemmung erfolgt bei einem Schweizer-Stecker jedoch durch die zusätzlich vorgesehene federnde Aufnahme 11. Durch diese Vielzahl von Aufnahmen 9, 10 und 11 an der Halterung 1 ist es möglich, die Halterung 1 für viele Typen von Haushaltsgeräten zu nutzen, welche für verschiedene Länder produziert werden.

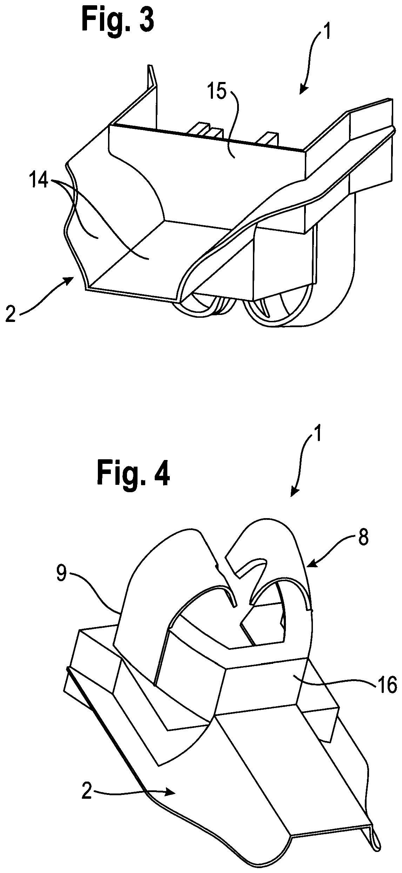

Fig. 3 zeigt die Halterung 1 von unten, d. h. von der Seite, an der das Befestigungselement 2 angeordnet ist. In diesem Ausführungsbeispiel für eine Halterung 1 besteht das Befestigungselement 2 aus flachen, sich zum Ende hin verjüngenden Kunststoffflächen 14, welche sich beim Einführen in das Transport- bzw. Verpackungsmaterial, wie beispielsweise Styropor, einschneiden, bis die Tragewand 15 auf der Oberfläche des Transportmaterials zu liegen kommt.

Fig. 4 zeigt schließlich die Halterung 1 von der unteren Rückseite her, von der die Rückseite des Befestigungselement 2 sowie des Trageelements 8 gut zu sehen sind. Hier wird klar erkennbar, dass auch der Boden 16 der formschlüssigen Aufnahme 9 beim Einführen des Befestigungselements 2 in das Transportmaterial auf dessen Oberfläche zu liegen kommt und damit die Halterung 1 stabilisiert.

Die Figuren 5, 6 und 7a - c zeigen jeweils, wie verschiedene Standardsteckertypen in der Halterung 1 aufgenommen werden können, wobei Fig. 5 einen Euro-Stecker 17, Fig. 6 einen Schweizer-Stecker 18 und Fig. 7 einen GB-Stecker 19 betrifft. Der Euro-Stecker wird über die federnde Euro-Steckeraufnahme 10, welche an seiner Rückseite angreift, wie in Fig. 5c besonders gut zu sehen ist, an die Haltekonturenwand 13, welche in der Fig. 5a gut sichtbar ist, gedrückt. Zwischen diesen beiden Elementen wird er festgehalten. Dabei greifen die Steckerkontakte 20 in die halbrund ausgebildeten Haltekonturen 4 formschlüssig ein. Die Haltekonturen 4 entsprechen in ihrer Form einem Teilbereich der äußeren Kontur der Steckerkontakte 20, können aber etwas kleiner ausgebildet sein, um die Steckerkontakte 20 klemmend festzuhalten. Die Steckerkontakte 20 liegen auf den Auflagen 5 auf, so dass sie bei einer Druckkontaktierung von der Oberseite her in ihrer Position verharren und von den nicht dargestellten Gegenkontakten zuverlässig kontaktiert werden.

Ggf. kann es zweckmäßig sein, oberhalb der beiden seitlichen Leitkonturen 7, die im oberen Seitenwangenbereich des Einführbereichs wie z.B. 6 für das Einfangen der Steckergegenkontakteinheit beidseitig vorgesehen sind, zusätzliche Leitkonturen derart vorzusehen, dass eine Verpackung, insbesondere Verpackungskarton, über ein Kältegerät, das die Halterung wie z.B. 1 für einen Steckverbinder wie z.B. 17 beispielsweise an seinem Außengehäuse oder an einem losen Verpackungsstandboden, auf dem es steht, aufweist, weitgehend verhakungsfrei übergestülpt werden kann. In der Figur 5a sind solche Leitkonturen strichpunktiert eingezeichnet und mit 21 bezeichnet. Sie weisen jeweils eine Flügelform auf. Insbesondere verjüngen sie sich jeweils von unten nach oben betrachtet. Durch diese Leitkonturen kann die Halterung insbesondere in einem Ausschnitt bzw. in einer freigeschnittenen Zone oder einer Aussparung des Verpackungskartons in definierter Weise positioniert werden, ohne dass es zu Verhakungen dessen Verpackungsmaterials mit der Halterung kommen kann. Auf diese Weise ist durch diese zusätzlichen Leitgeometrien an der Halterung eine automatisierte Verpackung durch einen Industrieroboter ermöglicht, die das Eingreifen einer Bedienperson nicht mehr erforderlich macht.

In ähnlicher Weise nimmt die Halterung 1 einen Schweizer-Stecker 18 auf, wie das in der Fig. 6a - c zu sehen ist. Der Schweizer-Stecker 18 wird ebenfalls von der federnden Aufnahme 10 an seiner Rückseite erfasst, wie in der Fig. 6c zu sehen ist und gegen die in der Fig. 6a gut sichtbare Haltekonturenwand 13 gedrückt. Zusätzlich wird der Schweizer-Stecker allerdings durch die Aufnahme 11, welche sich im federnden Bereich der Aufnahme 10 befindet, formschlüssig umfasst. Auch beim Schweizer-Stecker 18 liegen zwei der Steckerkontakte 20 auf den Aufnahmen 5 auf. Der dritte Steckerkontakt 20b wird in einer mittig liegenden rechteckigen Haltekontur 4 klemmend gehalten.

Diese mittlere Haltekontur 4 nimmt ebenfalls den mittleren Steckerkontakt 20b des GB-Steckers 19 auf, wie in den Fig. 7a - c zu sehen ist. Der GB-Stecker 19 selbst bzw. dessen Körper sitzt in der hierfür vorgesehenen formschlüssigen Aufnahme 9. Wie anhand der Figuren a und c deutlich zu sehen ist. Die beiden beim GB-Stecker 19 rechteckig ausgebildeten Steckerkontakte 20 liegen an den hierfür vorgesehenen seitlichen Haltekonturen 4b an, der Steckerkontakt 20b stützt sich auf einer mittleren Auflage 5b ab, die den GB-Stecker 19 bei der Druckbeaufschlagung durch nicht dargestellte Gegenkontakte in seiner Position stabilisiert.

Die Halterung 1 ist vorzugsweise als Spritzguss-Kunststoffteil realisiert, wobei die Wände des Befestigungselements 2 und des Positionierelements 3 sowie des Einführbereichs 6 ebenso wie die der formschlüssigen Aufnahme 9 stabil ausgebildet sind, während die Wände der federnden Aufnahme 10 und 11 elastisch sind. Dies kann beispielsweise durch die Wandstärke in Verbindung mit der Formgebung realisiert werden.

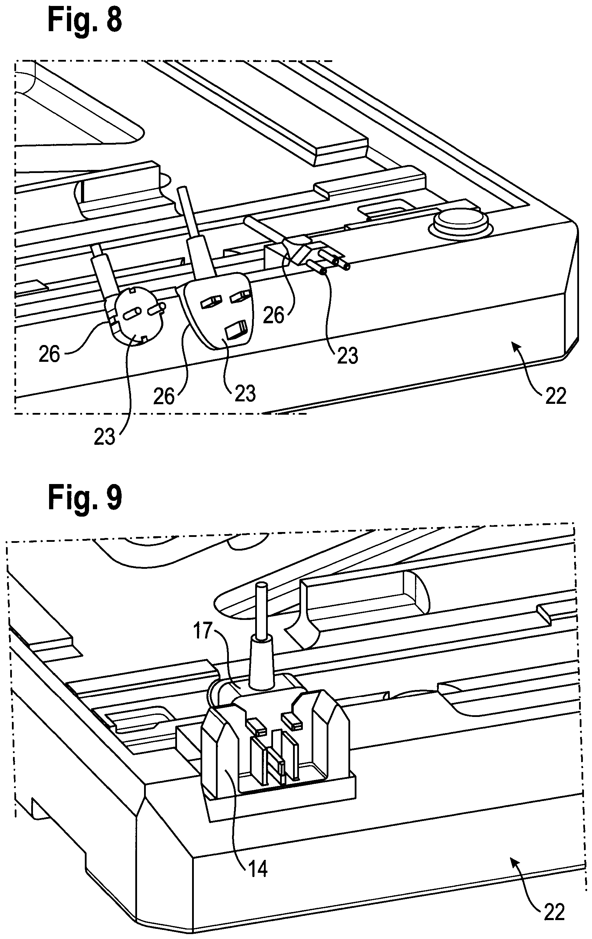

Figur 8 zeigt schematisch in perspektivischer Darstellung einen Verpackungsboden 22, insbesondere EPS (Expandiertes Polystyrol)-Boden, der dem Aufstellen und Lagern eines Haushaltsgeräts, insbesondere Haushaltskältegeräts dient. Er ist als ein im Wesentlichen rechteckförmiger Rahmen ausgebildet. Am äußeren Rand dieses Verpackungsbodens 22, insbesondere dort, wo die Rückseite des Haushaltsgeräts aufsitzt, sind in das Material des Verpackungsbodens ein oder mehrere Einbuchtungen, Einformungen, Einschnitte, Ausnehmungen, Vertiefungen oder dergleichen 26 integriert, insbesondere eingeformt, die als Halterungen für verschiedene Kabelstecker 23 dienen. Die Innenkontur der jeweiligen Einbuchtung 26 entspricht dabei weitgehend der Außenkontur des jeweilig zu lagernden Typs von Kabelstecker 23 derart, dass dieser in der Einbuchtung weitgehend passförmig festgeklemmt werden kann und dabei derart zu liegen kommt, dass seine jeweiligen Steckerkontakte bzw. Steckerstifte für die Kontaktierung mit korrespondierenden Gegenkontakten wie z.B. einer Prüf- oder Testeinrichtung frei liegend nach außen abstehen. Der Verpackungsboden bildet dabei eine Art "Lagerbett" für die ein oder mehreren Stecker. Insbesondere ist die Halterung für den jeweiligen Stecker in den Verpackungsboden bei dessen Herstellung bereits mit eingeformt.
Selbstverständlich kann es auch zweckmäßig sein, wenn eine derartige integrierte Halterung an einer sonstigen geeigneten Stelle der Verpackung für das Haushaltsgerät oder an dessen Außengehäuse oder Außenmantel vorgesehen ist.

Figur 9 zeigt schließlich schematisch, wie eine separate, d.h. eigens vorgesehene Halterung wie z.B. 1 von Figur 1 als Zusatzteil in eine entsprechend komplementär zu ihrer Außenkontur geformte Einbuchtung im äußeren Randbereich des Verpackungsbodens 22 eingesteckt ist. In der Halterung ist der jeweilig zugeordnete Stecker wie z.B. 17 in einer gewünschten, definierten Lage gehalten und positioniert, d.h. aufbewahrt. Die Halterung kann auch einer sonstigen geeigneten Stelle der Verpackung des Haushaltsgeräts angebracht sein.

Der jeweilige Stecker des jeweiligen Haushaltsgeräts ist auf diese Weise derart angeordnet, dass seine spätere elektrische Kontaktierung automatisiert werden kann. Seine Anordnung kann sowohl am Gerät selbst erfolgen als auch im verwendeten Verpackungsmaterial. Hierzu bieten sich insbesondere Verpackungsböden, vorzugsweise EPS (Expandiertes Polystyrol) -Böden, oder Kartonverpackungen an, wie sie bei Trocknern, Kühlund/oder Gefriergeäten, Herden oder Waschmaschinen verwendet werden. Weiterhin kann die Anordnung des Steckers auch über ein zusätzliches, eigens vorgesehenes Adapterteil erfolgen, dessen Innenkontur im Wesentlichen komplementär zur Außenkontur des Steckers ausgeformt ist. Der jeweilige Stecker wird dann zweckmäßigerweise zusammen mit seinem extra vorgesehenen Adapterteil definiert am zu prüfenden Haushaltsgerät oder dessen Verpackung angebracht. Ein oder mehrere nachfolgende automatische Prüfeinheiten können diese definierten Steckerpositionen nach Bedarf anfahren und mit Strom versorgen.

Die elektrische Kontaktierung des jeweiligen Steckers von verschiedenen Haushaltsgeräten lässt sich aufgrund dieser vorteilhaften Verwahrungskonstruktion automatisieren. Dies vermeidet Handarbeit. Insbesondere kann das Ein-/Ausstecken des Netzsteckers von Hand zum Zweck der Funktionsprüfung entfallen.
Diese vorteilhafte Anbringung, vorzugsweise Halterung und Positionierung des jeweiligen Steckers, d.h. Steckerverwahrung ist bei elektrisch betriebenen Haushaltsgeräten wie z.B. Herden, Kühl- und/oder Gefriergeräten, Dunstabzugshauben, kleinen Hausgeräten, Waschmaschinen, Trocknern, usw.... insbesondere für deren werksseitige, bevorzugt automatische Funktionsprüfung mittels einer elektrischen Prüfvorrichtung vorteilhaft.

### Bezugszeichenliste:

- 1: Halterung für Steckverbinder
- 2: Befestigungselement
- 3: Positionierelement
- 4: Haltekontur
- 5: Auflage
- 6: Einführbereich
- 7: Fangschräge
- 8: Trageelement
- 9: Formschlüssige Aufnahme
- 10: Federnde Eurostecker-Aufnahme
- 11: Federnde Aufnahme für Schweizer Stecker
- 12: Aufnahmeelement
- 13: Haltekonturenwand
- 14: Wände
- 15: Boden
- 16: Boden
- 17: Eurostecker
- 18: Schweizer Stecker
- 19: GB Stecker
- 20: Steckerkontakte
- 21: Leitkontur für Verpackung
- 22: Verpackungsboden
- 23: Stecker
- 26: Einformungen in Verpackungsboden

## Patentansprüche

1. Halterung (1) für einen Steckverbinder (17, 18, 19) zum Anschluss eines Haushaltsgeräts, insbesondere Kältegeräts, an die Netzspannung mit einem Befestigungselement (2) zum Befestigen der Halterung (1) am Haushaltsgerät, insbesondere Kältegerät, oder einem dem Haushaltsgerät, insbesondere Kältegerät, zugeordneten Element und ein Aufnahmeelement (12) für die Aufnahme des Steckverbinders (17, 18, 19), wobei das Aufnahmeelement (12) ein Positionierelement (3) aufweist, das zum Haltern der ein oder mehreren Steckerkontakte (20, 20b) des Steckverbinders (17, 18, 19) in einer definierten, kontaktierbaren Position so geformt ist, dass es die Steckerkontakte (20, 20b) selbst aufnimmt, und das Aufnahmeelement (12) einen Einführbereich (6) zum Einführen von Gegenkontakten zu den Steckerkontakten (20, 20b) aufweist, **dadurch gekennzeichnet, dass** das Positionierelement (3) zum Stützen der Steckerkontakte (20, 20b) gegenüber den Gegenkontakten eine Auflage (5, 5b) aufweist, deren Länge mehr als die Hälfte der Länge der Steckerkontakte (20, 20b) beträgt.

2. Halterung (1) für einen Steckverbinder (17, 18, 19) nach Anspruch 1, **dadurch gekennzeichnet, dass** das Positionierelement (3) Haltekonturen (4, 4b) aufweist, die so geformt sind, dass sie die Steckerkontakte (20, 20b) klemmend aufnehmen.

3. Halterung (1) für einen Steckverbinder (17, 18, 19) nach Anspruch 1 oder 2, **dadurch gekennzeichnet, dass** das Positionierelement (3) Haltekonturen (4, 4b) aufweist, die so geformt sind, dass sie die Steckerkontakte (20, 20b) formschlüssig aufnehmen.

4. Halterung (1) für einen Steckverbinder (17, 18, 19) nach Anspruch 1, 2 oder 3, **dadurch gekennzeichnet, dass** die Länge der stützende Auflage (5, 5b) mehr als die Hälfte der Länge der Steckerkontakte (20, 20b) beträgt.

5. Halterung (1) für einen Steckverbinder (17, 18, 19) nach Anspruch 4, **dadurch gekennzeichnet, dass** die Kontur der stützenden Auflage (5, 5b) der Außenkontur der Steckerkontakte (20, 20b) entspricht.

6. Halterung (1) für einen Steckverbinder (17, 18, 19) nach Anspruch 1, 2 oder 3, **dadurch gekennzeichnet, dass** die stützende Auflage (5, 5b) so angeordnet ist, dass sie die Steckerkontakte (20, 20b) in eine Richtung abstützt, in die die Befestigung mit dem Befestigungselement (2) gefestigt wird.

7. Halterung (1) für einen Steckverbinder (17, 18, 19) nach Anspruch 1, **dadurch gekennzeichnet, dass** Aufnahmeelement (12) für die Aufnahme des Steckverbinders (17, 18, 19) ein Trageelement (8) zur Halterung des Körpers des Steckverbinders (17, 18, 19) aufweist.

8. Halterung (1) für einen Steckverbinder (17, 18, 19) nach Anspruch 7, **dadurch gekennzeichnet, dass** das Trageelement (8) mehrere Aufnahmen (9, 10, 11) für unterschiedliche Typen von Steckverbindern (17, 18, 19) aufweist.

9. Halterung (1) für einen Steckverbinder (17, 18, 19) nach einem der vorhergehenden Ansprüche, **dadurch gekennzeichnet, dass** wenigstens eine Aufnahme (9, 11) des Trageelements (8) so geformt ist, dass sie den Körper des Steckverbinders (17, 18, 19) formschlüssig aufnimmt.

10. Halterung (1) für einen Steckverbinder (17, 18, 19) nach einem der vorgehenden Ansprüche, **dadurch gekennzeichnet, dass** das Trageelement (8) eine Aufnahme (10) mit federnden Greifbereichen aufweist.

11. Halterung (1) für einen Steckverbinder (17, 18, 19) nach einem der vorhergehenden Ansprüche, **dadurch gekennzeichnet, dass** der Einführbereich (6) sich in Richtung der Steckerkontakte (20, 20b) verjüngt.

12. Halterung (1) für einen Steckverbinder (17, 18, 19) nach einem der vorhergehenden Ansprüche, **dadurch gekennzeichnet, dass** das Befestigungselement (2) als Steckelement ausgebildet ist.

13. Halterung (1) für einen Steckverbinder (17, 18, 19) nach einem der Ansprüche 1 und 11, **dadurch gekennzeichnet, dass** das Befestigungselement (2) als Rastelement ausgebildet ist.

14. Haushaltsgerät, insbesondere Kältegerät, mit einer Halterung (1) nach einem der vorhergehenden Ansprüche als Transportsicherung für seinen elektrischen Steckverbinder (17) oder als Kontaktierungshilfe zum Anschluss von Testgeräten an seinen elektrischen Steckverbinder (17).

15. Verpackung für ein Haushaltsgerät, insbesondere Kältegerät, mit einer Halterung (1) nach einem der vorhergehenden Ansprüche als Transportsicherung für seinen elektrischen Steckverbinder (17) oder als Kontaktierungshilfe zum Anschluss von Testgeräten an seinen elektrischen Steckverbinder (17).

## Claims

1. Mounting (1) for a connector (17, 18, 19) for connection of a household device, in particular refrigeration device, to the mains voltage with a fastening element (2) for fastening on the mounting (1) on the household device, in particular refrigeration device, or an element associated with the household device, in particular refrigeration device, and a receiving element (12) for receiving the connector (17, 18, 19), wherein the receiving element (12) has a positioning element (3) which, for holding one or a multiplicity of connector contacts (20, 20b) of the connectors (17, 18, 19) in a defined, contactable position, is so shaped that it receives the connector contacts (20, 20b) itself, and the receiving element (12) has an insertion area (6) for the insertion of counter contacts for the connector contacts (20, 20b), **characterised in that** the positioning element (3) has a seating (5, 5b) for supporting connector contacts (20, 20b) against the counter contacts, the length of which seating (5, 5b) amounting to more than half of the length of the connector contacts (20, 20b).

2. Mounting (1) for a connector (17, 18, 19) according to claim 1, **characterised in that** the positioning element (3) has retaining contours (4, 4b), which are so shaped that they accept the connector contacts (20, 20b) in a clamped manner.

3. Mounting (1) for a connector (17, 18, 19) according to claim 1 or 2, **characterised in that** the positioning element (3) has retaining contours (4, 4b), which are so shaped that they accept the connector contacts (20, 20b) in a form-fitted manner.

4. Mounting (1) for a connector (17, 18, 19) according to claim 1, 2 or 3, **characterised in that** the length of the supporting seating (5, 5b) amounts to more than half of the length of the connector contacts (20, 20b).

5. Mounting (1) for a connector (17, 18, 19) according to claim 4, **characterised in that** the contour of the supporting seating (5, 5b) corresponds to the external contour of the connector contacts (20, 20b).

6. Mounting (1) for a connector (17, 18, 19) according to claim 1, 2 or 3, **characterised in that** the supporting seating (5, 5b) is so arranged that it supports the connector contacts (20, 20b) in a direction in which the fastening is fixed with the fastening element (2).

7. Mounting (1) for a connector (17, 18, 19) according to claim 1, **characterised in that** the receiving element (12) for receiving the connector (17, 18, 19) has a carrier element (8) for mounting of the body of the connector (17, 18, 19).

8. Mounting (1) for a connector (17, 18, 19) according to claim 7, **characterised in that** the carrier element (8) has a multiplicity of accommodations (9, 10, 11) for different types of connectors (17, 18, 19).

9. Mounting (1) for a connector (17, 18, 19) according to one of the preceding claims, **characterised in that** at least one accommodation (9, 11) of the carrier element (8) is so shaped that it accepts the body of the connector (17, 18, 19) in a form-fitted manner.

10. Mounting (1) for a connector (17, 18, 19) according to one of the preceding claims, **characterised in that** the carrier element (8) has an accommodation (10) with sprung gripping zones.

11. Mounting (1) for a connector (17, 18, 19) according to one of the preceding claims, **characterised in that** the insertion area (6) tapers in the direction of the connector contacts (20, 20b).

12. Mounting (1) for a connector (17, 18, 19) according to one of the preceding claims, **characterised in that** the fastening element (2) is embodied as a plug-in element.

13. Mounting (1) for a connector (17, 18, 19) according to one of the claims 1 and 11, **characterised in that** the fastening element (2) is embodied as a latching element.

14. Household device, in particular refrigeration device, with a mounting (1) according to one of the preceding claims as a transport lock for its electrical plug connector (17) or as a contacting aid for connection of test devices to its electrical connector (17).

15. Packaging for a household device, in particular refrigeration device, with a mounting (1) according to one of the preceding claims as a transport lock for its electrical connector (17) or as a contacting aid for the connection of test devices to its electrical connector (17).

## Revendications

1. Support (1) pour un connecteur (17, 18, 19), destiné au raccordement d'un appareil ménager, notamment d'un appareil frigorifique, à la tension du réseau comprenant un élément de fixation (2) destiné à fixer le support (1) sur l'appareil ménager, notamment sur l'appareil frigorifique, ou sur un élément associé à l'appareil ménager, notamment à l'appareil frigorifique, et un élément de logement (12) pour le logement du connecteur (17, 18, 19), l'élément de logement (12) présentant un élément de positionnement (3) qui est formé pour maintenir un ou plusieurs contacts de connecteur (20, 20b) dans une position définie pouvant mettre en contact, de manière à ce qu'il loge lui-même les contacts de connecteur (20, 20b), et l'élément de logement (12) présentant une zone d'introduction (6) destinée à introduire des contre-contacts vers les contacts de connecteur (20, 20b), **caractérisé en ce que** l'élément de positionnement (3) destiné à soutenir les contacts de connecteur (20, 20b) par rapport aux contre-contacts présente un appui (5, 5b) dont la longueur est de plus de la moitié de la longueur des contacts de connecteur (20, 20b).

2. Support (1) pour un connecteur (17,18,19) selon la revendication 1, **caractérisé en ce que** l'élément de positionnement (3) présente des contours de maintien (4, 4b) qui sont formés de manière à ce qu'ils logent les contacts de connecteur (20, 20b) en les serrant.

3. Support (1) pour un connecteur (17, 18, 19) selon la revendication 1 ou 2, **caractérisé en ce que** l'élément de positionnement (3) présente des contours de maintien (4, 4b) qui sont formés de manière à ce qu'ils logent les contacts de connecteur (20, 20b) par adhérence de forme.

4. Support (1) pour un connecteur (17, 18, 19) selon la revendication 1, 2 ou 3, **caractérisé en ce que** la longueur de l'appui (5, 5b) de soutien est de plus de la moitié de la longueur des contacts de connecteur (20, 20b).

5. Support (1) pour un connecteur (17, 18, 19) selon la revendication 4, **caractérisé en ce que** le contour de l'appui (5, 5b) de soutien correspond au contour extérieur des contacts de connecteur (20, 20b).

6. Support (1) pour un connecteur (17, 18, 19) selon la revendication 1, 2 ou 3, **caractérisé en ce que** l'appui (5, 5b) de soutien est disposé de manière à ce qu'il soutienne les contacts de connecteur (20, 20b) dans une direction dans laquelle la fixation est fixée avec l'élément de fixation (2).

7. Support (1) pour un connecteur (17, 18, 19) selon la revendication 1, **caractérisé en ce que** l'élément de logement (12), pour le logement du connecteur (17, 18, 19), présente un élément porteur (8) pour la fixation du corps du connecteur (17, 18, 19).

8. Support (1) pour un connecteur (17, 18, 19) selon la revendication 7, **caractérisé en ce que** l'élément porteur (8) présente plusieurs logements (9, 10, 11) pour différents types de connecteurs (17, 18, 19).

9. Support (1) pour un connecteur (17, 18, 19) selon l'une quelconque des revendications précédentes, **caractérisé en ce qu'**au moins un logement (9, 11) de l'élément porteur (8) est formé de manière à ce qu'il loge le corps du connecteur (17, 18, 19) par adhérence de forme.

10. Support (1) pour un connecteur (17, 18, 19) selon l'une quelconque des revendications précédentes, **caractérisé en ce que** l'élément porteur (8) présente un logement (10) muni de zones de préhension élastiques.

11. Support (1) pour un connecteur (17, 18, 19) selon l'une quelconque des revendications précédentes, **caractérisé en ce que** la zone d'introduction (6) se rétrécit en direction des contacts de connecteur (20, 20b).

12. Support (1) pour un connecteur (17, 18, 19) selon l'une quelconque des revendications précédentes, **caractérisé en ce que** l'élément de fixation (2) est réalisé comme élément à enficher.

13. Support (1) pour un connecteur (17, 18, 19) selon l'une quelconque des revendications 1 et 11, **caractérisé en ce que** l'élément de fixation (2) est réalisé comme élément d'enclenchement.

14. Appareil ménager, notamment appareil frigorifique, comprenant un support (1) selon l'une quelconque des revendications précédentes en tant que sécurité de transport pour son connecteur électrique (17) ou en tant qu'aide de mise en contact pour le raccordement d'appareils de test sur son connecteur électrique (17).

15. Emballage pour un appareil ménager, notamment appareil frigorifique, comprenant un support (1) selon l'une quelconque des revendications précédentes en tant que sécurité de transport pour son connecteur électrique (17) ou en tant qu'aide de mise en contact pour le raccordement d'appareils de test sur son connecteur électrique (17).
